Europäisches Patentamt

**European Patent Office**

Office européen des brevets

(11) Publication number: **0 014 040**
A1

# EUROPEAN PATENT APPLICATION

(21) Application number: **80300065.2**

(22) Date of filing: **07.01.80**

(51) Int. Cl.³: **A 63 B 45/00, A 63 B 39/06, B 32 B 7/14, B 29 H 7/02**

(30) Priority: **09.01.79 US 2207**

(43) Date of publication of application: **06.08.80**
**Bulletin 80/16**

(84) Designated Contracting States: **DE FR GB**

(71) Applicant: **ALBANY INTERNATIONAL CORP., 1 Sage Road, Menands New York 12201 (US)**

(72) Inventor: **Skelton, John, 11 Alden Street, Sharon, Massachusetts 02067 (US)**
Inventor: **Schoppee, Meredith M., 9 Fruit Street, Norfolk, Massachusetts 02056 (US)**
Inventor: **Schiffer, Daniel K., 66 Berry Street, Framingham, Massachusetts 01701 (US)**
Inventor: **Parker, Roy B., Box 248A Cobbossee, Monmouth, Maine 04259 (US)**

(74) Representative: **Jennings, Roy Alfred et al, GILL, JENNINGS & EVERY 53/64 Chancery Lane, London WC2A 1HN (GB)**

(54) **Tennis balls and methods of covering tennis balls.**

(57) A method of adhering a textile fabric tennis ball cover (16) to a tennis ball core (18) comprises providing a film of hot-melt adhesive (12) between the cover (16) and the core (18) when the cover (16) is assembled on the core (18) and then causing the hot-melt adhesive (12) to melt in contact with the core (18) and the cover (16), preferably by R-F or microwave heating. Upon solidifying, the adhesive (12) adheres the cover (16) to the core (18) of the tennis ball (20) with a high degree of tenacity.

## TENNIS BALLS AND METHODS OF COVERING TENNIS BALLS

This invention relates to methods of adhering textile fabric tennis ball covers to cores. of tennis balls.

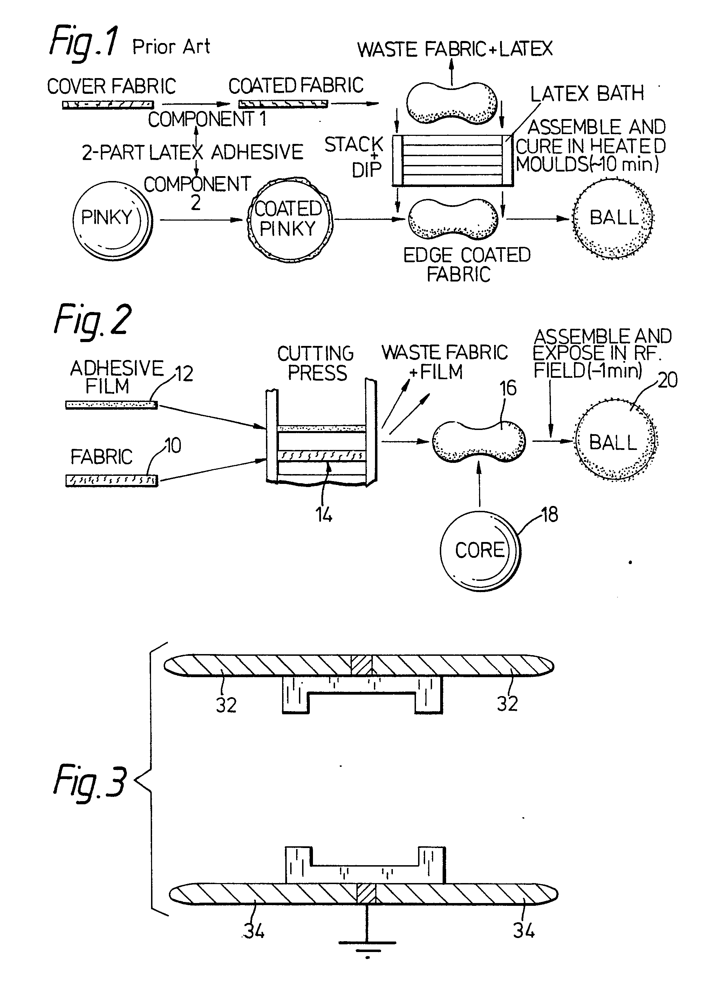

A conventional method of covering tennis balls is shown diagrammatically in Figure 1 of the accompanying drawings. In this conventional method, the cover fabric is coated with one component of a two-part solvent-based latex adhesive, and the core is coated with the second component. An array of identical dumbbell-shaped pieces are cut from the adhesive-coated cover fabric and the remaining fabric is removed as waste. The dumbbell-shaped pieces are stacked in register with each other and the stack of pieces are clamped together and are dipped in a latex bath so that the edges of the individual pieces are coated with the latex. After separation of the pieces in the stack, the adhesive-coated core and two of the adhesive-backed and edge-coated dumbbell-shaped pieces are assembled to form a complete ball. The assembled balls are cured in heated moulds for approximately 10 minutes, during which time the adhesive bond between the cover and the core is developed, and a seam between the edges of the pieces is formed. The method involves three distinct coating and drying steps, an elaborate and time-consuming stacking and unstacking procedure and a slow cure cycle for the assembled ball. The waste fabric from the cutting operation is contaminated with adhesive, which is difficult and expensive to remove, and hence the potential for recycling the waste is small.

The object of the present invention is to simplify the prior art method of covering tennis balls by reducing the number of steps required and eliminating the need for

0014040

solvent based adhesives. Solvents must be evaporated into the atmosphere during drying and the release of solvents into the atmosphere is of course an undesirable occurrence. In addition, in a preferred method in accordance with the invention, the waste fabric from the above-described cutting operation is not contaminated with adhesive. The waste cuttings can therefore be economically recycled.

According to this invention, a method of adhering a textile fabric tennis ball cover to a tennis ball core comprises providing a tennis ball core (18), providing a textile fabric tennis ball cover (16) of a size and shape to fit closely around and cover the core (18), providing a hot-melt adhesive (12) in a solid form, fitting the cover to the core with the adhesive (12) associated with the cover (16) and in contact with the core (18), causing the adhesive (12) to melt into contact with the cover (16) and the core (18), and allowing the molten adhesive to solidify, whereby the cover is adhered to the core.

The invention also includes tennis balls covered by a method in accordance with the invention.

The term "core" as used herein is synonymous with the trade-used term "pinky".

An example of a method in accordance with the invention will now be described with reference to the accompanying drawings, in which:-

Figure 1 is a diagrammatic representation of a prior art method of adhering a cover to a core of a tennis ball as already described;

Figure 2 is a diagrammatic representation of the example of the method in accordance with the invention;

Figure 3 is a cross-sectional view of a suitable R-F electrode arrangement employed in the method in accordance with the invention; and,

Figure 4 is a cross-sectional view of a tennis ball covered by the method in accordance with the invention.

Referring to Figure 2, a sheet of a covering fabric 10 and a solid film of a hot-melt adhesive are fed separately to a cutting press 14. In the cutting press 14, the film 12 and the fabric 10 are laminated together within the outline of a cutting die 14 by the application of a heated shoe. The cutting die 14 cuts the laminate to a size and dumbbell-shape appropriate for covering a tennis ball core. In this manner, the hot-melt adhesive film 12 is brought into intimate association with the covering fabric 10.

From the press 14 emerge dumbbell-shaped pieces 16 of the fabric with the solid hot-melt adhesive attached to them in perfect register, and separate and distinct pieces of waste fabric and waste adhesive film. Since the fabric waste is not contaminated by the adhesive, the potential for economic recycling of the separate waste fabric and the separate waste hot-melt adhesive film is great.

In the next step of the method, two of the pieces 16 are assembled with a core 18 (pinky) of a tennis ball. The assembly of the tennis ball is carried out without the use of a separate adhesive applied directly to the core 18 (as is required in the prior art method). The assembly can often be carried out more easily if the dumbbell-shaped fabric/adhesive pieces 16 are preformed so that they conform more closely to the shape of the core. The preforming can be done by assembling the pieces around an inert core in a mould and heating them briefly to allow the adhesive film 12 to soften and deform. After cooling, the pieces 16 are removed from the mould and are reassembled on the rubber core 18. While the best fit with the core is achieved if the preforming is done on a spherical mould, an adequate fit can also be achieved if the pieces 16 are preformed around a cylindrical form. This modification has the advantage that it can be carried out continuously by feeding the pieces 16 around a heated cylindrical roller. The laminate pieces 16 are assembled on the core 18 with the film 12 in contact with the core 18.

The seam between the edges of the interlocking pieces 16 may be formed using a hot-melt adhesive of the same type as is employed in the film 12. The seaming adhesive material may be extruded as a filament and be separately applied to the core, or it can be applied to the outer edge of the dumbbell-shaped pieces 16 at the same time as the cutting is effected using injection moulding techniques. The use of the same material for the seam and for bonding the cover to the core improves the overall efficiency of the process of the invention since it offers an additional possibility for recycling waste material. If the seam adhesive is preassociated with the pieces 16, it is of course assembled with the core 18 simultaneously with assembly of the pieces 16 with the core 18. If the seam adhesive is used in the form of a separately extruded strip, it has been found that an extruded monofilament with a triangular cross-section offers advantages over a monofilament of circular cross-section since the triangular shape with one apex directed inwards towards the core gives good penetration of the seam adhesive between the abutting edges of the pieces 16, and at the same time gives the external surface of the seam adhesive the necessary width. Other cross-sectional shapes, such as a T-section can also achieve the same result.

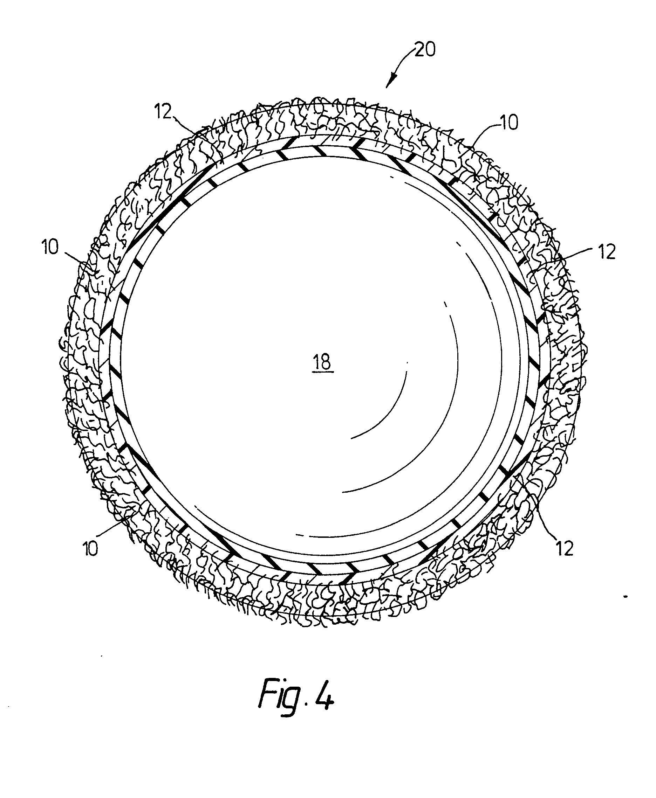

Following the assembly of the covering pieces 16 on the tennis ball core 18, the assembled ball may be placed in an appropriate jig or mould to hold the covering pieces in position.  The adhesive film 12 is then caused to melt and form a bond between the fabric pieces 16 and the core 18.  Upon allowing the molten adhesive to cool, it resolidifies, tenaciously adhering the fabric pieces 16 to the core 18, thus providing a covered tennis ball 20 as shown in Figure 4.

Melting of the hot-melt adhesive film 12 may be effected by the direct application of heat, by radio-frequency radiation (R-F), by microwave radiation, or by other techniques.

The heating of the mould and ball can be carried out using direct application of heat, but a dramatic decrease in processing time can be achieved if some form of dielectric heating, such as R-F or microwave, is used.  With R-F heating the heating time can be reduced to less than one minute, compared with 10 minutes which is more typical of direct heating.  This is attractive not only for the opportunity that it offers for increasing production rates, but also for the potential savings in energy than can be realised.  The R-F heating technique reduces to approsimately one tenth the time taken for the critical bonding step and accordingly is a preferred step in the method of the invention as shown in Figure 2 This reduction of time during which the component parts of the tennis ball are exposed to high temperatures (circa 300-350°F.)  is also advantageous in that it provides a tennis ball of improved mechanical or physical properties in comparison with balls exposed to such heat for even as little as 10 to 15 minutes.  Thus, by the preferred method of the invention, a tennis ball may be obtained in which the adhesion between the core and the cover is achieved without substantial modification of the mechanical properties of the core or cover material caused by prolonged exposure to elevated temperatures. By the term "without substantial modification" we mean that following assembly of the core and covering, the change in the initial tensile modulus of the core material can be specified as being less than 2½%; in the tensile strength of the core material as less than 5%; in the effective compressive modulus of the complete cores as less than 2½%; in the energy rebound of the rubber cores (dropped from a height of 100 inches) as less than 2%; and in the torsional modulus of rewet wool fibre of the cover of less than 5%. Overall, there are no relevant mechanical property changes by more than 5% during assembly of the cover on the ball core. Those skilled in the art of tennis ball manufacture will appreciate the advantage of the superior balls which may be made by the preferred method of the invention.

If the adjesive is melted using R-F or microwave heating, it is necessary that the supporting mould be relatively transparent to radiation in the applied frequency ranges. In this way, the energy is absorbed mainly in the workpiece and the process efficiency is improved. Polytetrafluoroethylene is excellent for use as a mould material since it combines low dielectric loss, good mechanical workability and excellent release behaviour. It has been used very successfully both for forming a spherical cavity mould and for forming an inert core for the preforming of the fabric cover pieces.

Proper design of the electrodes is a factor in the use of R-F heating in the method of the invention. If an assembled ball is placed in an R-F field generated by two flat parallel opposed electrodes (perhaps the simplest possible electrode configuration), the heating effect is concentrated in an equatorial zone, since this zone has the greatest area of core and adhesive in a direction parallel to the electric field. It is very difficult to produce a uniform distribution of energy absorption throughout the entire volume of material in a hollow dielectric sphere,

0014040

but the width of the equatorial zone of high absorption
can be increased by appropriate electrode design.  If
the width of the dumbbell-shaped pieces 16 is made equal
to or greater than the width of the core 18, then
the lengthwise axes of the two interlocking pieces 16
that make up the ball cover can be aligned in turn with
the equatorial plane, and the cover can be completely
bonded to the core 18 in two passes through the R-F
field.  The desired uniformity of heating can be achieved
by rotating the ball through 90° about an axis perpendicular to the field lines during the interval between
passes; by actuating in turn each of two pairs of
electrodes oriented so that their field lines are
perpendicular; by continuous rotation of the mould
assembly during heating; or by the provision of a rotating
electric field.  A simple electrode design that produces
an increase in width of the heated equatorial zone is
shown in Figure 3.  In Figure 3, an upper electrode 32
is spaced above a lower electrode 34 to permit the ball
to be placed therebetween.

The utilisation of the heating energy can be optimised
by also making the dumbbell-shaped pieces 16 of uniform
width.  In this case the "dumbbell" shape degenerates into
a rectangle with semi-circular ends, but this shape, which
has been used to make completely satisfactory balls, has
the additional advantage that the efficiency of die
cutting the dumbbells is very high, since the packing of
the pieces 16 can be more dense if the edge boundaries
are straight.

The fabric 10 employed for the dumbbell-shaped
pieces 16 may be any fabric conventionally employed as a
tennis ball covering material.  Such fabrics are well
known to those skilled in the art.

The heat activated adhesive forming the film 12
may be any known hot-melt adhesive, preferably having a melting point within the range of from about 65°C to about 200°C . Representative of such hot-melt adhesives are:- polyepoxides, polyolefins, polyesters, polyamindes polyurethanes, ethylene vinyl acetate polymers, polyvinyl chlorides, polyvinyl butyrals, vinyl chloride - acetate polymers, nitrile phenolic polymers, acrylic acid-based polymers, styrene-butadiene copolymers, cellulose-derived polymers and blends of these materials.

If dielectric heating is used to melt the adhesive, the adhesive should also have the appropriate electrical properties.

The following examples describe a method in accordance with the invention in greater detail. Bond strength was determined by peeling the fabric pieces from the core using an Instron tensile tester with the ball held in a gimtal mount so it is free to rotate.

Example 1

A pair of "dumbbell" cut cover pieces for a rubber tennis ball core were provided. A sheet of polyamide hot-melt adhesive having a thickness of about 2 mils. was cut to match the shape and size of the cover pieces. The parts were assembled by first tacking the polyamide sheet to one surface of each of the "dumbbell" shaped cover pieces. The parts were then applied to the rubber core and the assembly was placed in an appropriate jig where it was exposed to R-F radiation for 20 seconds. Upon removal from the jig, it was found that the ball cover pieces were adhered to the core with a bond strength of circa 15 lb. per inch. It is apparent that during the R-F radiation the hot-melt polyamide adhesive sheet melted and then resolidified upon cooling to form the bond.

Example 2

A conventional tennis felt cover fabric was provided in sheet form. The sheet of fabric was overlaid with a film of polyester hot-melt adhesive. (Hytrel 4056 film adhesive, 5 mils thick). The sheet and the film were passed through a cutting press and were die cut to the shape and dimensions of dumbbells for covering a tennis ball core, with simultaneous lamination of the film of hot-melt adhesive to the fabric. The laminate dumbbells were applied assembled to a natural rubber pinky (core).

The assembled cover pieces and core were placed in a Teflon mould formed from a split 3" cube. Each half of the mould had a 2.5" diameter hemispherical cavity machined in it, and also had machined cut-outs to accommodate the electrode shape. The assembled ball components were then exposed to R-F energy, employing a Thermex (Registered Trade Mark) T36B324X R-F generator, operating at approximately 27 MHz, (supplied by Votator Division of Chemetron Corp., Louisville, Kentucky). The electrode configuration was as shown in Figure 3; a series inductance of approximately 5µH was located just before the high voltage electrode.

The R-F generator was tuned to give a grid current of 200 milliamps and a plate current of 0.50-0.75 amps. The ball was formed by making two exposures each of 30 seconds duration to the R-F field. The ball was cooled and rotated through 90° between exposures, so that each dumbbell-shaped piece was exposed in turn in the highly heated equatorial zone. A seam monofilament (Hytrel 5056 extruded monofilament) was added after the first pass.

The ball formed by this means was of excellent appearance and performance. When dropped from a height of 100 inches it rebounded 53 inches in accordance with specification.  The ball showed a bond strength between cover and core of 15-40 lb/inch.

Example 3

The prodecure of Example 2 above was repeated, but microwave radiation (Tappan 56-2343 microwave oven operating at a frequency of 2450 MHz) was employed instead of R-F radiation, a similar tennis ball was obtained.

Example 4

The procedure of Example 2 above was repeated, but the assembled core and covering was exposed to heat of 150°C. for 35 minutes in a conventional hot air oven instead of applying R-F radiation, the cover pieces were adjered to the core.  The film of adhesive used was Plastilok 800 instead of Hytrel 4056.

Example 5

A conventional tennis felt covering fabric was provided in sheet form and the sheet of fabric was overlaid with a film of hot-melt adhesive (Hytrel 4056 film adhesive, 5 mils thick).  The sheet and film were passed through a cutting press and were die cut to the shape and dimensions of dumbbells for covering a tennis ball, with simultaneous lamination of the film of hot-melt adhesive to the fabric.  The laminated dumbbells were assembled with a natural rubber pinky (core) in a Teflon mould formed from a split 3 inch cube.  Each half of the mould had a 2.5 inch diameter hemispherical cavity machined in it, and also had machined cutouts to accommodate the electrode shape.  The assembled ball components were then exposed to R-F energy, employing a Thermex (Registered Trade Mark) T36B324X R-F  generator, operating at approximately 27 MHz, (supplied by Votator Division of Chemetron Corp., Louisville, Kentucky).

The ball was formed by making two exposures, each of 30 seconds duration to the R-F field. The ball was cooled and rotated through 90° between exposures, so that each dumbbell-shaped piece was exposed in turn in the highly heated equatorial zone. A seam monofilament (Hytrel 5056 extruded monofilament) was added after the first pass.

The ball formed in this way was of excellent appearance and performance. When dropped from a height of 100 inches it rebounded 53 inches in accordance with specification. The ball showed a bond strength between cover and core of 15-40 lb/inch.

For an exposure time of 60 seconds, the maximum temperature at the interface between the cover and the core just exceeded the melting temperature of the Hytrel and thus a ball was produced with a total time of exposure to heat which is approximately one tenth of the time required in conventional processing, with attendant minimisation of elimination of potential thermal damage.

0014040

## C L A I M S

1.      A method of adhering a textile fabric tennis ball cover to a tennis ball core comprising providing a tennis ball core (18), providing a textile fabric ball cover (16) of a size and shape to fit closely around and cover the core (18), providing a hot-melt adhesive (12) in a solid form, fitting the cover to the core with the adhesive (12) associated with the cover (16) and in contact with the core (18), causing the adhesive (12) to melt into contact with the cover (16) and the core (18), and allowing the molten adhesive to solidify, whereby the cover is adhered to the core.

2.      A method according to claim 1, wherein the solid adhesive is in the form of a film (12).

3.      A method according to claim 2, wherein the film (12) is laminated to the cover (16) and the laminate is fitted around the core (18).

4.      A method according to any one of claims 1 to 3, wherein the adhesive is caused to melt by the application of radio-frequency heating.

5.      A method according to any one of claims 1 to 3, wherein the adhesive is caused to melt by the application of microwave heating.

6.      A method according to any one of the preceding claims, further comprising providing a sheet of tennis ball cover fabric (10), providing a sheet of a hot-melt adhesive (12), laying up together the sheet of cover fabric (10) and the sheet of hot-melt adhesive (12) to form a laminate and cutting from the laminate pieces of a size and shape adapted to fit closely around and cover the core and form the cover (16).

7.  A method according to claim 6, wherein the laying together and cutting are carried out simultaneously.

8.  A method according to claim 6 or claim 7, wherein a monofilament of the adhesive is fitted between the edges of the pieces of the laminate to form a seam of the tennis ball.

9.  A method according to any one of the preceding claims, in which the hot-melt adhesive comprises one of the following materials:-  a polyolefin, a polyester, a polyamide , polyurethane, ethylene vinyl acetate polymer, polyvinylidene chloride, polyvinyl butyral, vinyl chloride - acetate polymer, nitrile phenolic polymer, an acrylic acid-based polymer, styrene-butadiene copolymer, and a cellulose-derived polymer.

10.  A tennis ball comprising a core (18) and a cover (16) adhered to the core by a method in accordance with any one of the preceding claims.

11.  A tennis ball, in which adhesion between a core and a cover is achieved without substantial modification of the mechanical properties of the core or of the cover caused by prolonged exposure to elevated temperatures.

12.  A tennis ball according to claim 11, in which the adhesion is effected by the use of a hot-melt adhesive.

*Fig.1* Prior Art

COVER FABRIC

COATED FABRIC

WASTE FABRIC + LATEX

COMPONENT 1

LATEX BATH

2-PART LATEX ADHESIVE

STACK + DIP

ASSEMBLE AND CURE IN HEATED MOULDS(~10 min)

COMPONENT 2

PINKY

COATED PINKY

EDGE COATED FABRIC

BALL

*Fig.2*

ADHESIVE FILM 12

CUTTING PRESS

WASTE FABRIC + FILM

ASSEMBLE AND EXPOSE IN RF. FIELD(~1min) 20

16

FABRIC 10

14

BALL

CORE 18

*Fig.3*

32          32

34          34

0014040

Fig. 4

**European Patent Office**

**EUROPEAN SEARCH REPORT**

004040

Application number

EP 80 30 0065

## DOCUMENTS CONSIDERED TO·BE RELEVANT

| Category | Citation of document with indication, where appropriate, of relevant passages | Relevant to claim |
|---|---|---|
| | US - A - 3 881 041 (GLIENKE)<br>* column 1, lines 3 to 5 and 15 to 30;<br>column 3, lines 20 to 28;<br>column 5, lines 21 to 29 * | 1-6,<br>9 |
| | -- | |
| | DE - A1 - 2 619 355 (DUNLOP LTD.)<br>* page 1, last line to page 2,<br>paragraph 1 * | 1 |
| | -- | |
| | Patents Abstracts of Japan<br>Volume 1, number 12, 22 march 1977,<br>page 601 C 76<br>& JP - A - 51 - 125 424 | 11,12 |
| | -- | |
| A | CH - A5 - 569 580 (DYNAMIT NOBEL AG)<br>* column 1, lines 8 to 12, 25 to 45 * | |
| | -- | |
| A | DE - A1 - 2 526 595 (DUNLOP LTD.)<br>* claims 1 to 5 * | |
| | -- | |
| A | GB - A - 1 373 005 (DUNLOP HOLDINGS<br>LTD.)<br>* page 1 * | |
| | ---- | |

**CLASSIFICATION OF THE APPLICATION (Int. Cl.3)**

A 63 B   45/00
A 63 B   39/06
B 32 B    7/14
B 29 H    7/02

**TECHNICAL FIELDS SEARCHED (Int.Cl.3)**

A 63 B   39/00
A 63 B   45/00
B 29 H    7/02
B 29 H    7/06
B 32 B    7/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |

| Place of search | Date of completion of the search | Examiner |
|---|---|---|
| Berlin | 18-04-1980 | DROPMANN |

EPO Form 1503.1   06.78